# EUROPEAN PATENT APPLICATION

(11) **EP 4 764 931 A1**
(43) Date of publication of application: **24.06.2026**
(21) Application number: 24222061.4
(22) Date of filing: 20.12.2024
(51) Int. Cl.: G06F 30/13, G06F 111/02

(54) **SYSTEM AND METHOD FOR COLLABORATIVE MODELLING OF PHYSICAL STRUCTURES**

(71) Applicant: Trimble Inc, Westminster CO 80021 (US)
(72) Inventor: SUOMI, Jukka, 02600 Espoo (FI); BAGGE, Thomas, 02600 Espoo (FI); RIHTNIEMI, Timo, 02600 Espoo (FI); SALONEN, Mika, 02600 Espoo (FI); LAUKALA, Juha, 02600 Espoo (FI); RANTANEN, Teemu, 02600 Espoo (FI); HEIKKONEN, Teemu, 02600 Espoo (FI)
(74) Representative: Pfundner, Benjamin Patrick

(57) **Abstract**

A computer-implemented method for transmitting changes during collaborative model editing is disclosed. The method comprises running a modelling application configured to model physical structures as model objects and receiving a reference model object, wherein the reference model object is representative of at least part of a first model object. The method comprises creating a transmission object comprising at least one of a proxy model object comprising a modified version of the reference model object and a second model object. The method further comprises creating a reference transmission object, wherein the reference transmission object is representative of at least part of the transmission object, and transmitting the reference transmission object.

## Description

### TECHNICAL FIELD

The present disclosure relates to a computer-implemented method for transmitting changes in a modelling application, a computer-implemented method for receiving changes in a modelling application, and applications of these two methods.

### BACKGROUND

The development of data processing systems, computers and computer applications has transformed different processes into computerised processes. One example of such a process is modelling a component, object, or structure prior to manufacture. Modelling means that a computer model is created that represents, within a modelling application, a product under design. A model may be suitable for describing the product to be constructed, and may contain at least information needed to illustrate the product. A product being manufactured may comprise or be represented by one or more model objects. Computer applications typically apply predefined object types that are used to create model objects of structures that exist, or will exist, or are planned to exist, in the real world. Examples of these structures in the field of building and construction modelling include walls, beams, columns, plates, foundations, and reinforcement, amongst others. A product model may comprise, in principle, an unlimited number of model objects that together provide a model of some or all of the product in question. A product model maybe, naturally, used in a manufacturing process, where a manufacturing system creates a physical realisation of the structures represented by model objects, in other words the product or components thereof.

Modelling applications allow people to collaborate on modelling projects, while reducing the potential for miscommunication. This collaboration vastly improves the ability for teams of people to cooperate, design and manufacture joint projects and products more efficiently. On the other hand, however, collaborative modelling also has significant potential drawbacks. A major potential drawback relates to data security. Typically, model objects are shared among many users to enable the various users to collaborate and make their own modifications to the model objects. Whilst collaboration is enabled, such model object sharing carries significant technical problems related to data security, because shared models or model objects and their associated (meta)data are made available to all collaborators. Further to this, efficient access-control and technical prevention of data leaks are additional challenging problems encountered in this setup. A potential solution to these problems would be data encryption, however this is typically cumbersome and computationally intensive, and is in any case susceptible to cryptographic attacks.

Therefore, it would be advantageous to provide methods or systems that address at least some of the problems described above.

### SUMMARY

In summary, the present document describes a computer-implemented method for transmitting changes during collaborative model editing, the method comprising: running a modelling application configured to model physical structures as model objects; receiving a reference model object, wherein the reference model object is representative of at least part of a first model object; creating a transmission object comprising at least one of: a proxy model object comprising a modified version of the reference model object, and a second model object; creating a reference transmission object, wherein the reference transmission object is representative of at least part of the transmission object; and transmitting the reference transmission object.

Additional aspects of the present are set out in the independent claims. Advantageous example implementations are described in the dependent claims and in the following detailed description.

### BRIEF DESCRIPTION OF THE DRAWINGS

Aspects of the present disclosure will now be described, by way of example only, with reference to the accompanying drawings, in which:
Fig. 1 shows a flowchart illustrating a computer-implemented method for transmitting changes during collaborative model editing;
Fig. 2 shows a flowchart illustrating a computer-implemented method for receiving changes during collaborative model editing;
Fig. 3 illustrates an example workflow in a modelling application, implementing the methods illustrated in Figs. 1 and 2;
Fig. 4 illustrates another example workflow in a modelling application, implementing the methods illustrated in Figs. 1 and 2; and
Fig. 5 illustrates a computer system comprising a memory and a processor, wherein the computer system is configured to perform any of the methods described in this disclosure.

### DETAILED DESCRIPTION

The present disclosure relates generally to improved systems and methods for enabling collaborative modelling of physical structures prior to or during manufacture. In particular, the disclosed systems and methods enable efficient collaboration during modelling, and allow for collaboration without compromising data security.

In a first aspect, the present disclosure provides a computer-implemented method for transmitting changes during collaborative model editing. This collaborative editing may comprise editing the same or separate models. The method comprises running a modelling application configured to model physical structures as model objects. These physical structures may comprise any suitable structure that may be modelled, such as buildings, support structures, fences, pipe systems, networks, waterworks, mechanical devices, electronic devices, assembly lines, manufacturing plants, or any components thereof.

In a subsequent step, a reference model object is received, wherein the reference model object is representative of at least part of a first model object. The first model object may be a model object that is being worked on by the transmitting party, i.e. the party that has transmitted the reference model object. For example, the model object may be an object that is being collaborated on by both the transmitting party and the receiving party, where the receiving party is the party that has received the reference model object.

The disclosed methods lend themselves particularly well to use in a federated model environment. A federated model is a model that is being developed, edited, or worked on in a decentralised environment. An example of such a federated modelling workflow may be the situation where each user has their own copies of model objects and the users only exchange modifications to these models. This is in contrast to a centralised model environment, where all users are effectively working on a single, centralised version of a model or model object. An advantage of a federated modelling environment over a centralised modelling environment is decreased infrastructural demands, as there is no need to provide centralised infrastructure, such as a server or a "ground truth" version of the model. Another benefit of a federated approach to modelling is increased fault tolerance, since the system is "decentralised" and there is no possibility of service degradation due to unavailability of centralised servers/nodes/controllers and the like. A federated modelling environment also enables easier collaboration, since users can join and leave the federated project more easily than when joining a restricted domain or an internal network that is commonly associated with a centralised modelling environment.

Returning to the disclosed method introduced above, by transmitting a reference model object rather than the (native) first model object itself, data security is improved because the data transmitted may be closely controlled. In particular, the reference model object need not contain all the information included in the (native) first model object. Rather, the reference model object may optionally contain only a subset of the information for first model object, such as the subset of information required by the receiving party in order to collaborate on the model in question. In this manner, information need only be shared on a "need to know" basis, and information relating to a model object that is not directly relevant for a particular collaboration task need not be included in the reference model object and thus need not be shared. As well as improving data security, this also reduces the total amount of data shared, thereby making the process more computationally efficient and reducing bandwidth usage.

The receiving party may at this stage wish to collaborate and/or transmit its own model object(s). To facilitate this, the disclosed method further comprises a step of creating a transmission object. This transmission object comprises at least one of: a proxy model object comprising a modified version of the reference model object; and a second model object. In other words, once the reference model object has been received, the receiving party can then start to collaborate with the sending party by creating a transmission object. This transmission object encodes or represents the changes to the model that will be transmitted by the original receiving party, generally (although not necessarily) back to the party that originally sent the reference model object.

As noted, the transmission object may contain a proxy model object comprising a modified version of the reference model object. Such a proxy model object may be created on the basis of the reference model object, and may encode modifications carried out on the reference model object. Creation of such a proxy model object ensures that the reference model object itself need not be editable, such that reference model objects may be "read-only". This is advantageous because the reference model object then always accurately represents the information initially shared among the collaborators. Furthermore, such a read-only reference model can be advantageously used to delineate the changes that have to be transmitted to other users, instead of transmitting the entire chain of modifications to the proxy model.

The transmission object may alternatively or additionally comprise a second model object. The second model object is an object distinct from the reference model object. For example, the second model object may be a new model object that the party creating the transmission object is proposing to add to the federated model.

While the transmission object could simply be transmitted as-is, the disclosed systems and methods advantageously enable the use of reference objects to be used also in respect of the transmission object. In view of this, the disclosed method further comprises creating a reference transmission object, wherein the reference transmission object is representative of at least part of the transmission object. In other words, on the basis of the transmission object, a reference transmission object is created, wherein the reference transmission object is representative of at least part of the transmission object. Analogously to the reference model object discussed above, use of a reference transmission object means that the reference transmission object need not contain all the information included in the transmission object. As discussed above, use of reference objects in this manner improves data security and improves efficiency by avoiding the need to share more information between collaborating parties than is strictly necessary.

Finally, the method comprises the step of transmitting the reference transmission object. Upon receipt. the reference transmission object may be used to update the first model object. Alternatively or additionally, an update to the first model object may be based, at least in part, on the data comprised in the reference transmission object.

It will be appreciated that transmission of both the reference model object and the reference transmission object may be done via any suitable communication protocol, for example over an internet connection between computer systems of two collaborating parties collaborating on the federated model.

In some examples, the transmission object may contain a connection object. A connection object is configured to connect the proxy model object to another model object. The "another" model object may be the second model object referred to above, or another proxy model, or the same proxy model object (for example where the connection object connects to the same object at different locations). Use of such connection objects allows for creating connections between reference model objects and/or model objects, while maintaining a high level of data security.

The function performed by a connection object may include describing a physical connection used to connect two physical entities (represented by model objects). For example, the connection object may model one or more fastening means, such as bolts, rivets, screws etc.

Alternatively or additionally, connections objects may model or describe one or more dependencies between at least two physical entities. The one or more dependencies may comprise a physical, logical, regulatory, or any other sort of dependency between at least two model objects. An example of a physical dependency may be the need for a support beam, without which the structure being modelled would collapse. An example of a logical dependency may be a requirement encoded in the logic embedded in the connection object. An example of such logic may be connection logic described elsewhere in this disclosure. An example of a regulatory dependency may be any property that the structure being modelled needs to possess for regulatory (safety) reasons.

In some examples, the connection object may comprise data describing the physical interaction of two or more connected physical entities. This data may be data that has no physical or material representation. For example, the connection object may describe thermal conductivity of the modelled connection, or changes to the relevant stress tensors in the physical structures being connected.

In some examples, the modelling application is a Building Information Modelling (BIM) application. Advantageously, the disclosed methods can be used in a BIM application to support a building-modelling workflow. Such an application and workflow may be particularly beneficial where multiple subcontractors edit object models within the same federated model. By implementing the disclosed methods in such an environment, each subcontractor may receive only the reference model objects required to complete their respective tasks and each reference object can contain only the information required to enable collaboration, as described above.

In some examples, the reference transmission object may be compressed, or minified, or adapted for use in an incremental update scheme. The reference transmission object may be transmitted over a network, and it may therefore be advantageous to pre-process the reference transmission object to save bandwidth. Such preprocessing may comprise the aforementioned compression; minification; and/or usage of an incremental update scheme.

In some examples, the creation logic of objects comprised in the transmission object is not comprised in the transmission object. Creation logic may comprise the computer-executable instructions, or data that can be transformed into computer executable instructions, that governs the creation of a proxy model object or a second model object included in the transmission object. In an example, the transmission object may comprise a steel beam object that has been designed to connect to another steel beam object. In that case, creation logic may comprise an algorithm used to compute the details of the weld required to connect these two steel beams, such as the type of welding technique, or the changes induced in the material due to such weld. By not including this data in the transmission object, the transmission object is smaller, which leads to better use of computation resources and lowers the amount of data that needs to be processed and/or transmitted in a later step. Data security is also once again improved because potentially sensitive or proprietary algorithms owned by one party need not be transmitted needlessly to another. Importantly, this data security is obtained without harming the ability of the parties to collaborate on the modelling project at hand.

In an example, the proxy model object is automatically generated responsive to a user input indicating an intended modification to the reference model object. By generating the proxy model object responsive to a user input indicating an intended modification to the reference model object, the speed of the application and memory usage is improved. In another example, the transmission object may be generated when any modification is performed. In yet another example, the proxy model object and/or the transmission object may be generated in response to a subset of pre-defined modifications, wherein these generation-triggering modifications may be defined by the type of the modification or any other characteristic of the modification.

In an example, creating the proxy model object comprises using a machine learning algorithm. For example, a machine learning algorithm may be used to streamline modifications made by the user to a different set of modifications, that may be equivalent, or substantially equivalent, or that may bring about a modification that is functionally or otherwise equivalent or interchangeable with the modifications made by the user. In another example, a machine learning algorithm may be used to add additional modifications to the modifications made by the user. In yet another example, a machine learning algorithm may be used to remove some of the modifications made by the user. In a further example, a machine learning algorithm may be used to refine changes made by the user, for example to improve modelling efficiency and accuracy. By using a machine learning algorithm, changes may be optimized without user intervention, leading to improved modelling output and less data being used in a proxy model object and during the transmission of a proxy model object.

In a second aspect, this disclosure provides a computer-implemented method for receiving changes during collaborative model editing. The method comprises running a modelling application configured to model physical structures as model objects, transmitting a reference model object comprising at least a portion of a first model object, and receiving a reference transmission object. The reference transmission object can have the characteristics described above and elsewhere herein.

This receiving method represents the counterpart to the method of the first aspect, described above. In other words, this method describes the collaboration process from the perspective of the change-receiving party. The disclosed method provides a mechanism for creating the reference model object described above, transmitting the reference model object, and receiving a reference transmission object comprising modification to the model. The benefits are as discussed above. In particular, the use of reference objects by both parties ensures that a reduced amount of information can be shared without impeding collaboration on the federated model. Further to that, the use of reference model objects and reference transmission objects improves or ensures data security, and minimises the chance of leaks.

In some examples, after receiving a reference transmission object, it may be used to update at least one model object. The at least one model object may be the first model object. For example, if the transmission object contains a proxy object comprising a (proposed) modification to a first model object, then the first model object may be modified using this data, such as to correspond with the received proxy object. In another example, if the transmission object contains a second model object, then the second model object can be imported into the modelling application and, for example, added to the federated model alongside the first model object. The method may comprise an approval step, wherein a user or an automated system reviews and approves (or disapproves) a modification or addition to one or more model objects proposed in a received reference transmission object. This provides a check step before proposed modifications are permitted to affect existing model entities, which provides another advantage over centralised models where typically proposed modifications are simply approved on a "first to save" principle, that is the first party to make a modification gets their modification approved and saved.

In some examples, an authentication mechanism may be provided. Such a mechanism is advantageous in an environment with high data security requirements. In particular, prior to transmitting the reference model object, a recipient of the reference model object may be authenticated. Then, the step of transmitting the reference model is, or is not, performed responsive to determining whether the recipient has been authenticated. This further improves data security by providing a mechanism to control the distribution of reference model objects and ensuring that reference model objects are not transmitted to unauthorised parties.

In some examples, the model objects are configured to be used in a manufacturing process during which the model objects are manufactured. For example, the model may comprise a structure or entity that is due to be manufactured, and the model objects may represent the components thereof. For example, the individual model objects may model bricks and mortar, and these model objects can be manufactured and used by a brick-laying robot in order to construct a wall. Alternatively, the model objects may describe electronic parts and printed-circuit boards, which can be manufactured and used during assembly of an electronic device.

In some examples, the transmitting and receiving of reference model objects and/or reference transmission objects may be carried out without using a central controller. A central controller may be a file repository; a server configured to share data among modelling applications; a network drive; or any similar technology providing data storage, or centralized control of modelling applications. Instead, these objects may be transmitted using a peer-to-peer protocol; using a push protocol; using email; or using any suitable technology that does not require centralized data storage. This enables federated model environments which have the advantages discussed above.

In some examples, the physical structures modelled by the model objects in the modelling application may comprise components of a structure or building. These components may include, for example, one or more of: bricks; concrete; beams; mortar; electrical wiring; pipes; air-conditioning ducts; glass; windows; terrain modifications (such as holes for the foundation of a building); or any other physical structures that a person skilled in the art of building construction, civil engineering, or any related field may need to model.

In some examples, the reference transmission object may further comprise metadata describing the objects comprised in it. Such metadata may provide additional context about the modifications encoded in or represented by the data comprised in the reference transmission object. For example, such metadata may comprise information describing the extent of data disclosed to the creator of said changes, and/or an identifier of the creator of these changes, and/or a timestamp related to these changes. This metadata may be used to enable audit and/or tracking by technical means. Alternatively or additionally, such metadata may be used for automatic conflict resolution in case of conflicting changes encoded in the reference transmission object.

The method may further comprise manufacturing, using at least the reference transmission object described above or elsewhere herein, at least one physical structure, the physical structure being modelled, at least in part, by a model object comprised in the reference transmission object.

Accordingly, a manufacturing method is described, the method comprising any of the methods described previously, and further comprising a step of manufacturing, using at least the reference transmission object, at least one physical structure, the physical structure being modelled, at least in part, by a model object comprised in the reference transmission object. For example, the method may use the reference transmission object with a proxy model object to manufacture a modified version of the physical structure that the proxy object relates to. In another example, the reference transmission object may contain a model object and the method may manufacture the physical structure described by said model object.

In a third aspect, this disclosure describes a manufacturing method comprising manufacturing, using at least a reference transmission object as described above or elsewhere herein, at least one physical structure, the physical structure being modelled, at least in part, by a model object comprised in the reference transmission object.

In a fourth aspect, the present disclosure describes an application configured to generate manufacturing instructions based on a model object and a reference transmission object as described above or elsewhere herein.

An application may generate manufacturing instructions based on a model object and a received reference transmission object. For example, an application may receive a transmission object and use the transmission object and another model object (for example, a model object contained in the application) to generate manufacturing instructions. The application may be the same or a different application as the modelling application.

In some examples, such an application (as well as any of the modelling applications described herein) may be a computer-aided design (CAD) application, a building information modelling (BIM) application, an electronic design automation (EDA) application, or any other application also configured to model physical structures.

In a fifth aspect, the present disclosure describes a physical structure manufactured using manufacturing instructions derived from at least a reference transmission object, the reference transmission object.

In some examples, this physical structure may be a component of a building. These components may comprise, for example, bricks; concrete; steel beams; mortar; electrical wiring; pipes; air-conditioning ducts; glass; windows; terrain modifications (such as holes for the foundation of a building); or any other physical structures that a person skilled in the art of building construction, civil engineering, or any related field may need to model.

In a further aspect of the present disclosure, a computer-readable storage medium is provided. The computer-readable storage medium stores processor-executable instructions that, when executed, cause one or more processors to perform one or more of the methods disclosed herein.

In a further aspect of the present disclosure, a computer system comprising a memory and a processor is provided. The computer system is configured to perform one or more of the methods disclosed herein.

Aspects of the present disclosure and example implementations will now be described with reference to the drawings in order to further aid understanding.

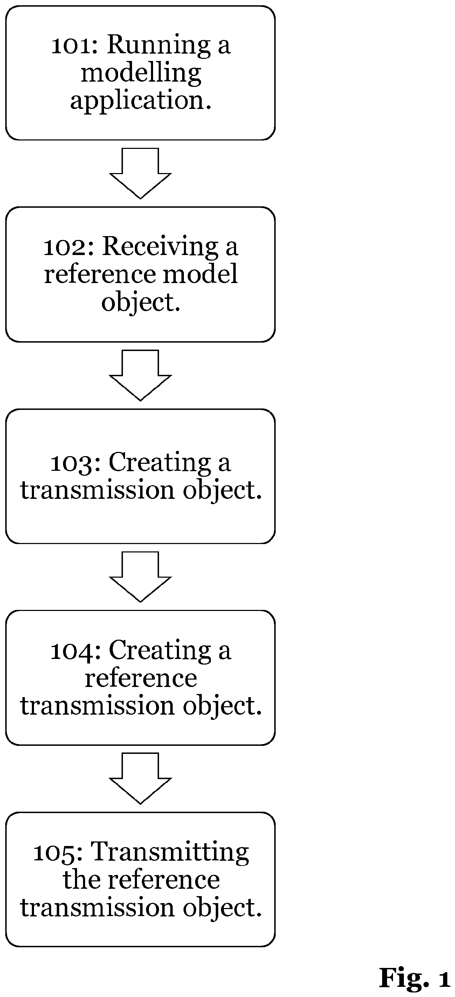

Fig. 1 shows an example of a computer-implemented method for transmitting changes during collaborative model editing. At step 101, a modelling application is run. The modelling application is configured to model physical structures as model objects. These model objects may be data structures or files configured to represent or encode physical structures and/or properties thereof. When opened or run in the modelling application, the model objects may provide a visual model, typically three-dimensional, of a given physical structure. The modelling application may then enable modifications to be made to the model objects, as described further below and as is known in the art. Such a modelling application may be a computer-aided design (CAD) application, a building information modelling (BIM) application, an electronic design automation (EDA) application, or any other application also configured to model physical structures. The physical structures being modelled may comprise any suitable structure that may be modelled such as buildings, support structures, fences, pipe systems, networks, waterworks, mechanical devices, electronic devices, assembly lines, manufacturing plants, or any components thereof.

At step 102, a step of receiving a reference model object is performed. This receiving step may be performed via network transfer, via receiving a data storage device, via import from a saved or cached file, or via any other data transfer method known in the art. The reference model object represents or comprises at least a part of a first model object. The first model object may be a model object that is being worked on by the transmitting party, that is the party that transmitted the reference model object. For example, the model object may be an object in an overarching federated model that is being collaborated on by both the transmitting party and the receiving party. Additionally or alternatively, it may be a model object that the transmitting party transmitted with the intention that the receiving party works on it.

In an illustrative example, the receiving and transmitting parties may be collaborating on a model of a building. The first model object in that case may be a beam which the transmitting party is working on. The transmitting party may wish for the receiving party to collaborate on the model by creating a fixture to which the beam can connect. To facilitate this, a reference version of the beam model is transmitted by the transmitting party and received, at step 102, by the receiving party. On the basis of this received reference model object, the receiving party can now begin collaborating on the model by designing a suitable fixture for attachment to the beam (first model object).

The first model object may contain a variety of data about the beam, only a subset of which is needed by the receiving party to enable the receiving party to perform the required collaboration. Accordingly, the reference model object transmitted may only include that necessary data, while other data about the model object of the beam is omitted. For example, the reference model object transmitted may include data about the geometry of the beam and information that the beam is made of steel, such that the receiving party can design a suitable fixture for attachment to the beam. However, the reference model object may not include other more detailed data about the beam, such as the precise type of steel, the method by which the beam was made, or any other proprietary information not required by the receiving party. By omitting this unneeded data, the reference object can be made "leaner", in other words smaller and more data efficient. Further, data security is improved because potentially sensitive proprietary data, such as concerning details of how the steel beam was or is to be manufactured, need not be shared. The decision of what data to include in the reference object may be made on the basis of user input, for example user input(s) provided by the transmitting party. For example, a user may select, via a suitable user interface, which data to include in the reference model object. Alternatively or additionally, this process may be partially or fully automated. For example, the system may determine which data needs to be shared based on an indicated task to be performed, and may then omit any other data from the reference model object that is determined not to be necessary for completing the task in question.

Advantageously, because a reference of the first model object (e.g., the beam in the example described above) is transmitted rather than the first model object itself, data security is improved and bandwidth usage is reduced. This is because, as just described, the reference model object (e.g., the reference version of the beam) need not contain all the information included in the first model object itself (e.g., the native model of the beam stored by the transmitting party). Rather, the reference model object may contain only a subset of the information for first model object, such as the subset of information required by the receiving party in order to collaborate or work on the model in question. In this manner, information need only be shared on a "need to know" basis, and information relating to a model object that is not directly relevant for a particular collaboration or work task need not be included in the reference model object and thus need not be shared. As well as improving data security, this also reduces the amount of data shared, thereby making the process more computationally efficient and reducing bandwidth usage.

In another example, the reference model object may comprise all information comprised in the first model object. This may be advantageous in a setting where the party receiving the reference model object is trusted or requires full information in order to work or collaborate on the model in question. In the setting of the example above, where the first model object contains data about the geometry of the beam, and about its material composition, such as detailed description of the steel used, the reference model object may comprise all data contained in the first model object.

In general, the possibility to choose different scopes of information disclosure in the reference model object enables a need-to-know approach to data sharing, wherein one method can provide different levels of data disclosure, for example as dictated by technical requirements inherent to the collaboration project in question. Due to this data sharing approach, data security is greatly improved, as there is no need to share any superfluous sensitive information. In particular, this avoids the possibility of unauthorised data extraction, because data that is to be kept secret can be omitted from the reference object that is to be shared.

At step 103, a step of creating a transmission object is performed. The transmission object comprises at least one of: a proxy model object comprising a modified version of the reference model object; and a second model object. This transmission object encodes or represents the changes to the model that will be transmitted by the party that received the reference model object. From a different perspective, the transmission object allows for collaborating with the party that transmitted the reference model object; or, alternatively or additionally, working for or performing a task for the party that transmitted the reference model object.

The transmission object may contain a proxy model object comprising a modified version of the reference model object. The proxy model object is created on the basis of the reference model object, and may initially represent an exact copy of the received reference model object. However, unlike the reference model object, the proxy model object can be modified or edited, and may therefore encode or represent modifications carried out on the reference model object. Creation of such a proxy model object ensures that the reference model object itself need not be editable, such that reference model objects may be "read-only", which has the advantages described above.

Returning to the example of the beam and fixture introduced above, the receiving party has been instructed to design a fixture for connection to the steel beam. In order to facilitate this, the receiving party may wish to make changes to the steel beam. The received reference model object of the beam is not itself directly editable in this example, so the receiving party generates a proxy of the steel beam, in other words a proxy model object. This proxy model object can be edited, such that design changes to the steel beam can be proposed. The proxy model object can thus be considered as a modified or proposed version of the received reference model object.

The transmission object may alternatively or additionally comprise a second model object. The second model object is an object distinct from the reference model object. In other words, the second model object represent or encodes a different physical object than the first model object. It may also be a duplicate or a copy of the reference model object. For example, the second model object may be a new model object that the party creating the transmission object is proposing to add to the federated model. In another example, the second model object may be a copy of the reference model object that has identical properties as the reference model objects, but represents or encodes a distinct physical structure that may be further manipulated independently of the reference model object.

Within the context of the above example, involving a steel beam and a fixture, the fixture can be considered as a second model object. In this case, therefore, the receiving party creates a proposed fixture that is intended for connection to the steel beam. This new model object can then be included in the transmission object, alongside the above-described proxy model object, ready for transmission back to the original transmitting party.

At step 104, a reference transmission object is created, wherein the reference transmission object is representative of at least part of the transmission object created at step 103. Analogously to the reference model object discussed above in reference to step 102, use of a reference transmission object means that the object or package transmitted need not contain all the information included in the transmission object. As discussed above, use of reference objects in this manner improves data security and improves efficiency by avoiding the need to share more information between collaborating parties than is strictly necessary. That said, as before, the reference transmission object may comprise all the information comprised in the transmission object in some examples, such as where the party receiving the reference transmission object is trusted or requires full information in order to work or collaborate on the model in question. Use of reference transmission objects thus has the same advantages described above.

Returning to the previous example, the transmission will contain data describing the fixture, the fixture being the second model object, and a proxy model object that represents or encodes changes required to the reference model object (the steel beam) in order to accommodate the fixture. As before, the reference transmission object may only contain data that is strictly needed by the (original) transmitting party for the collaboration in question. For example, the reference transmission object may comprise data about the geometric outline of the fixture, but may omit detailed information about the material composition or manufacturing process of the fixture. As before, this reduces the amount of data that is transmitted and improves data security without hampering collaboration. Ultimately, the disclosed system and methods enable both parties to receive just that data required to collaborate on a given task, but nothing more.

In some cases, the transmission object created at step 103 and referenced by the reference transmission object of step 104 may further comprise a connection object configured to connect the proxy model object to another model object. The connection object may comprise logic, or computer instructions, that dictate the parameters of the connection; and/or data about the connection that is difficult or expensive to compute.

Returning to the example above regarding a steel beam and a fixture, the connection object may comprise a bracket, weld, or any other suitable connection means for connecting the steel beam to the fixture. The connection object may also specify further information such as modifications to physical quantities, such as thermal conductivity, due to the connection (e.g., a weld).

At step 105, a step of transmitting the reference transmission object created at step 104 is described. It will be appreciated that transmission of the reference transmission object may be done via any suitable communication protocol, for example over an internet connection between computer systems of two collaborating parties collaborating on the federated model. Additionally or alternatively, this transmission may be carried out via sending a data storage device, via export to a saved or cached file, or via any other method known to a skilled person.

As can be seen, the method of Fig. 1 provides an improved method for collaboration wherein reference versions of model objects can be received and transmitted in such a way that reduces data transmission and improves data security without hampering collaboration.

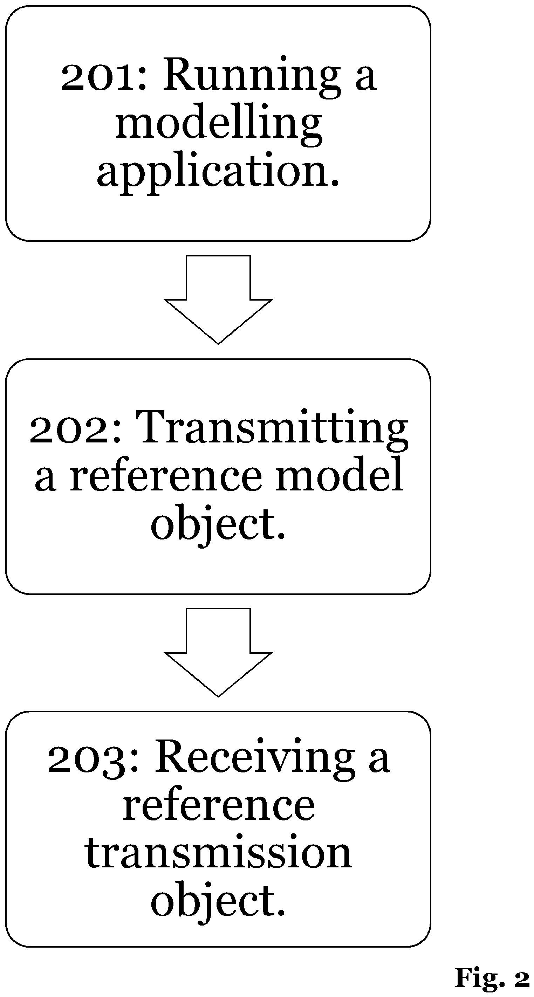

Fig. 2 shows an example of a computer-implemented method for receiving changes during collaborative model editing. It will be appreciated that this method is a counterpart to the method described in Fig. 1. In particular, whereas Fig. 1 is from the perspective of the party that receives the initial reference model (the "receiving party" discussed above), Fig. 2 is from the perspective of the party that transmits the initial reference model (the "transmitting party" discussed above). Accordingly, it will be appreciated that the steps of Fig. 1 may in some cases be performed by a first entity using a first computing system. The steps of Fig. 2 may similarly be performed by a second entity using a second computing system.

At step 201, a modelling application is run. This application may be the same, or a similar, application to that run at step 101 of Fig. 1 and the same considerations and implementation details discussed above therefore also apply here.

At step 202, a step of transmitting a reference model object is described. It will be appreciated that this step may precede step 102 described above, and the reference model object transmitted at step 202 may be the same reference model object received at step 102. As noted above, it will be appreciated that transmission of the reference model object maybe done via any suitable communication protocol, for example over an internet connection between computer systems of two collaborating parties collaborating on the federated model. Additionally or alternatively, this transmission may be carried out via sending a data storage device, via export to a saved or cached file, or via any other method known to a skilled person.

At step 203, a step of receiving a reference transmission object is described. It will be appreciated that this step may follow step 105 described above, and the reference transmission object received at step 203 may be the same reference transmission object transmitted at step 105. It will again be appreciated that receiving of the reference transmission object may be done via any suitable communication protocol, for example over an internet connection between computer systems of two collaborating parties collaborating on the federated model. Additionally or alternatively, this step may be carried out via receiving a data storage device, via import of a saved or cached file, or via any other method known to a skilled person.

The reference transmission object received at step 203 may be used to update at least one model object. For example, the proxy model object comprised or encoded in the reference transmission object may be used to update the first model object, which was previously used to create the originally transmitted reference model object. Alternatively or additionally, a (new) model object may be created using the second model object comprised or encoded in the reference transmission object. Alternatively or additionally, a connection object may be imported or updated, based on a connection object included or encoded in the reference transmission object.

To provide another illustrative example of the process described above in relation to Figs. 1 and 2, consider the case where the first model object is a model of a concrete wall. This first model object may comprise information describing or encoding the geometry of the wall; the chemical composition of the concrete used; the curing protocol to be used during construction; and measurement data from an experiment with a physical realisation of said modelled wall. It may be desired to collaborate with another entity, but said collaboration only requires the receiving party to receive the model of the concrete wall and the geometry information. In that case, a reference model object derived from said first model object may be created and transmitted (step 202), where the reference model object comprises only data related to the geometry of the modelled concrete wall. The other data, relating to the chemical composition, curing protocol, and experimental data, are omitted from the reference model object. The collaborating party may propose, using a proxy version of the reference model object, changes to the geometry of the concrete wall. The reference transmission object received at step 203 may then comprise a reference version of a proxy model which incorporates said changes to said geometry. In some cases, the received reference transmission object may also comprise a (reference) version of a second model object, such as a model of a dog shed to be placed next to said concrete wall. In some cases, the reference transmission object may also comprise a (reference) version of a connection object describing the relative position of the wall and the dog shed and a connection therebetween, such as via a bolt that fixes the dog shed to the concrete wall. As can be seen, straightforward collaboration is facilitated and in the case of every object (i.e., the original concrete wall, the modified concrete wall, the dog shed and the bolt) only a reference version of the model object need be shared which provides the benefits discussed above.

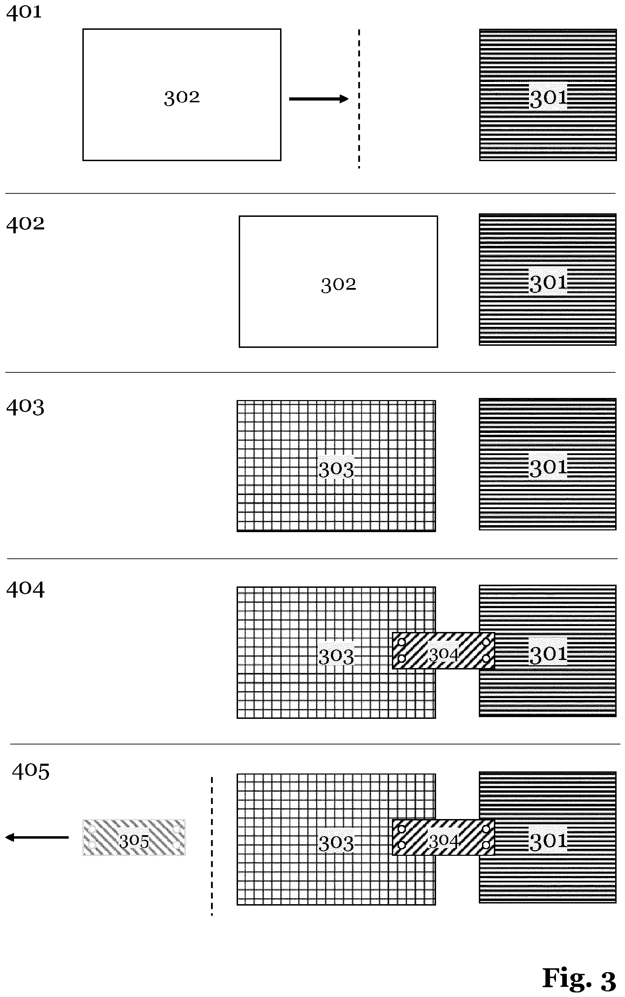

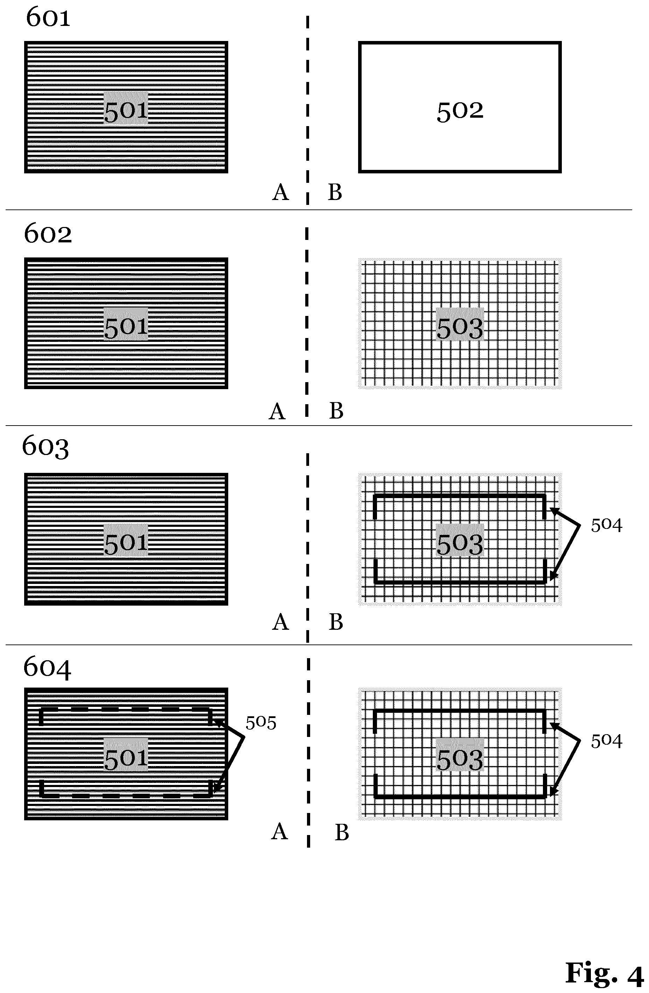

To further aid understanding, the methods of Figs. 1 and 2 will now be described using additional examples with reference to Figs. 3 and 4.

Turning to Fig. 3, this shows an illustrative example of a workflow enabled by the methods described in Figs. 1 and 2. In Fig. 3, this workflow is described in reference to abstract data objects, however it will be appreciated that these data objects can be representative of any modelled physical structure.

In the context of Figs. 3 and 4, the party that sends the reference model object, as described, for example, in connection with step 202 in Fig. 2, will be called "party A". The party that receives the reference model object, as described, for example, in connection with step 102 in Fig. 1, and later transmits the reference transmission object, as described, for example, in connection with step 105 in Fig. 1, will be called "party B". In the examples below, the collaboration is between only parties A and B, and so party A receives the reference transmission object from party B. However, it will be appreciated that the reference transmission object may be additionally or alternatively sent to one or more other parties, and the disclosed methods are not limited to one-to-one collaboration between only two parties.

At step 401, party B is running a modelling application, the modelling application comprising a model object 301. Specifically, model object 301 represents a physical structure which party B is modelling within the modelling application. While party B is running the modelling application, party B receives a reference model object 302 from party A. From the perspective of party B, these steps correspond to steps 101 and 102 in Fig. 1. From the perspective of party A, the transmitting of the reference model object (not explicitly shown in Fig. 3) corresponds to step 202 in Fig. 2.

At step 402, Fig. 3 shows the data available to party B right after receiving the reference model object at step 401. Party B is in possession of, at least, the reference model object 302 and the model object 301. The received reference model object represents, within the modelling application a (reference version of) another physical structure.

At step 403, a proxy model object 303 is created from the reference model object 302. The modelling application may still retain the reference model object 302. The proxy model object 303 may represent or encode a modification to the reference model object 302, for example in the form of instructions or a bundle of one or more proposed modifications to the reference model object 302. In some such cases, the modifications may not yet have been actually made to the reference model object 302. Alternatively or additionally, the proxy model object 303 may represent or encode a modified version of the reference model object 302, in other words a reference model object that has already been modified by Party B.

At step 404, a connection object 304 is created, describing a connection between the proxy model object 303 and the model object 301. Such a connection object may be as described above and elsewhere in this disclosure and represents a connection between the physical structure embodied by model object 301 and proxy model object 303.

At step 405, a transmission object is created, a reference version of the transmission object is created, and then the reference transmission object 305 is transmitted from party B to party A. These steps are shown in a single schematic image in Fig. 3 and correspond to steps 103-105 of Fig. 1 from the perspective of party B. From the perspective of party A, receiving the transmission reference object corresponds to step 203 in Fig. 2. The reference transmission object 305 may be based, at least in part, on the connection object 304. Note that the reference transmission object 305 is a data object distinct from the other objects 301, 302, 303, 304 (or any other object not shown in Fig. 3) in the modelling application of party B.

Fig. 4 shows yet another illustrative example of a workflow enabled by the methods described in Figs. 1 and 2. In this illustrative example, the disclosed systems and methods are used to facilitate collaboration relating to reinforcing a concrete wall using steel bars.

At step 601, party A is in possession of a first model object 501 and party B is in possession of a reference model object 502 based on the first model object 501. In this example, the first model object 501 is a (native) model of a concrete wall, comprising all the information that party A has in its modelling application about said concrete wall. The reference model object 502 may be a model object that comprises only a subset of this information, such as the geometric data related to said concrete wall. Step 601, from the perspective of party A, corresponds to the state after step 202 in Fig. 2. From the perspective of party B, step 601 corresponds to the state after step 102 in Fig. 1.

At step 602, party B creates a proxy model object 503, based on the reference model object 502. This proxy model object is as described in reference to previous figures and elsewhere in this disclosure. In this example, the proxy model object 503 may (additionally) represent concrete that fills the geometric outline encoded in the reference model object 502.

At step 603, party B creates a second model object 504, representing two steel structures reinforcing the concrete wall.

At step 604, party B has transmitted a reference transmission object to party A, said reference transmission object comprising a model representative of at least a part of information comprised in the second model object 504. Party A has used said reference transmission object to create a new model object 505 in its modelling application. Party A may have also received a (reference version of) proxy model object 503 (not shown) and/or a connection object (not shown). Step 604, from the perspective of party A, corresponds to the state after step 203 in Fig. 2. From the perspective of party B, step 601 corresponds to the state after step 105 in Fig. 1.

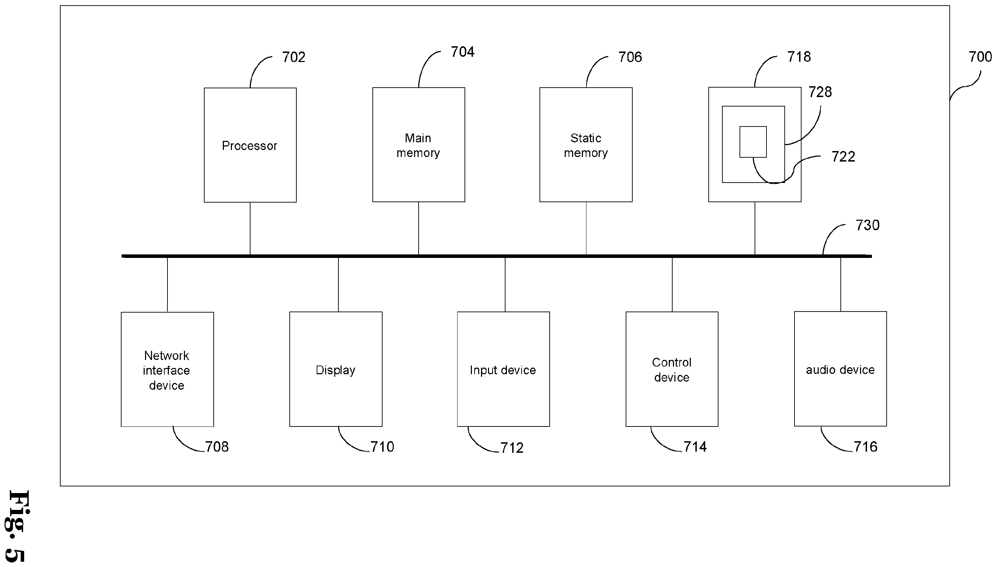

Some or all of the disclosed methods may be implemented using a computer apparatus or computing device. Accordingly, the methods described herein may form all or part of a computer-implemented method. Each party involved in the collaborative modelling may have their own computer apparatus and may perform one or more of the above described method steps on their own computer. An example computing device, suitable for performing some or all of the above disclosed method steps, is shown in Fig. 5.

With reference to Fig. 5, a processing system 700 suitable for carrying out the methods described herein will now be described. Fig. 5 shows a block diagram of one implementation of a processing system 700 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 700 includes a processor 702, a main memory 704 (e.g., read-only memory (ROM), flash memory, dynamic random-access memory (DRAM) such as synchronous DRAM (SDRAM) or Rambus DRAM (RDRAM), etc.), a static memory 706 (e.g., flash memory, static random-access memory (SRAM), etc.), and a secondary memory (e.g., a data storage device 718), which communicate with each other via a bus 730.

Processor 702 represents one or more general-purpose processors such as a microprocessor, central processing unit, or the like. More particularly, the processor 702 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 702 may also be one or more special-purpose processors such as an application specific integrated circuit (ASIC), a field programmable gate array (FPGA), a digital signal processor (DSP), network processor, or the like. Processor 702 is configured to execute the processing logic (instructions 722) for performing the operations and steps described herein.

The processing system 700 may further include a network interface device 708. The processing system 700 also may include any of a video display unit 710 (e.g., a liquid crystal display (LCD) or a cathode ray tube (CRT)), an alphanumeric input device 712 (e.g., a keyboard or touchscreen), a cursor control device 714 (e.g., a mouse or touchscreen), and an audio device 716 (e.g., a speaker).

It will be apparent that some features of the processing system 700 shown in Fig. 5 may be absent. For example, the processing system 700 may have no need for display device 710 (or any associated adapters). This may be the case, for example, for particular server-side computer apparatuses which are used only for their processing capabilities and do not need to display information to users. Similarly, user input device 712 may not be required. In its simplest form, processing system 700 comprises processor 702 and main memory 704.

The data storage device 718 may include one or more machine-readable storage media (or more specifically one or more non-transitory computer-readable storage media) 728 on which is stored one or more sets of instructions 722 embodying any one or more of the methods or functions described herein. The instructions 722 may also reside, completely or at least partially, within the main memory 704 and/or within the processor 702 during execution thereof by the processing system 700, the main memory 704 and the processor 702 also constituting computer-readable storage media 728.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 702 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

It is to be understood that the above description is intended to be illustrative, and not restrictive.

For example, while this disclosure comprises examples mostly related to building-modelling workflows, it will be appreciated that the disclosed systems and methods can be used in an analogous manner in the setting of any other modelling application configured to model physical structures as model objects. These model objects may be data structures or files configured to represent or encode physical structures and/or properties thereof.

Similarly, while the above examples generally focus on collaboration between two parties, it will be appreciated that this is merely to aid understanding and collaboration between three or more parties is also possible. Specifically, the disclosed methods may be performed by any suitable number of parties to aid collaboration during modelling and manufacture of physical structures.

The precise steps of manufacturing a physical structure being modelled using the disclosed systems and methods are generally beyond the scope of this disclosure, however it will be understood that any suitable manufacturing process may be used. For example, one or more physical structures may be manufactured based on the model objects described herein, for example by using an additive manufacturing process such as 3D printing, by instructing one or more construction machines or robots to manufacture the structure, and/or by providing instructions to one or more human operators. In each case, the manufacturing instructions may be derived from or based on the data associated with the model objects in the modelling application as is known in the art.

Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

This disclosure further comprises the following clauses:
1. A computer-implemented method for transmitting changes during collaborative model editing, the method comprising:
   running a modelling application configured to model physical structures as model objects;
   receiving a reference model object, wherein the reference model object is representative of at least part of a first model object;
   creating a transmission object comprising at least one of:
      a proxy model object comprising a modified version of the reference model object; and
      a second model object;
   creating a reference transmission object, wherein the reference transmission object is representative of at least part of the transmission object; and
   transmitting the reference transmission object.
2. The method of clause 1, wherein the transmission object further comprises a connection object configured to connect the proxy model object to another model object.
3. The method of clause 2, wherein the connection object models at least one of:
   a physical connection between at least two physical entities; and
   one or more dependencies between at least two physical entities.
4. The method of clause 3, wherein the connection object further comprises data describing the physical interaction of two or more connected physical entities.
5. The method of any preceding clause, wherein the modelling application is a Building Information Modelling (BIM) application.
6. The method of any preceding clause, wherein the reference transmission object is compressed, or minified, or adapted for use in an incremental update scheme.
7. The method of any preceding clause, wherein the transmission object does not comprise creation logic associated with some or all of the model objects comprised within the transmission object.
8. The method of any preceding clause wherein the proxy model object is automatically generated responsive to a user input indicating an intended modification to the reference model object.
9. The method of any preceding clause, wherein creating the proxy model object comprises using a machine learning algorithm.
10. A computer-implemented method for receiving changes during collaborative model editing, the method comprising:
   running a modelling application configured to model physical structures as model objects;
   transmitting a reference model object comprising at least a portion of a first model object; and
   receiving a reference transmission object as described in any of clauses 1-9.
11. The method of clause 10, further comprising updating at least one model object based on the reference transmission object, optionally wherein the at least one model object is the first model object.
12. The method of any of clauses 10 or 11, further comprising:
   prior to transmitting the reference model object, authenticating a recipient of the reference model object,
   wherein the step of transmitting the reference model object is performed responsive to determining that the recipient has been authenticated.
13. The method of any preceding clause, wherein the model objects are configured to be used in a manufacturing process during which the model objects are manufactured.
14. The method of any preceding clause, wherein the transmitting and receiving steps are carried out without using a central controller.
15. The method of any preceding clause, wherein the physical structures modelled by model objects comprise components of a building.
16. The method of any preceding clause, wherein the reference transmission object further comprises metadata describing the objects comprised within it.
17. The method of any preceding clause, further comprising:
   manufacturing, based on at least the reference transmission object, at least one physical structure, the physical structure being modelled, at least in part, by a model object comprised in the reference transmission object.
18. A manufacturing method comprising manufacturing, using at least a reference transmission object as described in any of clauses 1-17, at least one physical structure, the physical structure being modelled, at least in part, by a model object comprised in the reference transmission object.
19. An application configured to generate manufacturing instructions based on a model object and a reference transmission object as described in any of clauses 1-17.
20. The application of clause 19, wherein the application is a Building Information Modelling (BIM) application.
21. A physical structure manufactured using manufacturing instructions derived from at least a reference transmission object, the reference transmission object being as described in any of clauses 1-17.
22. The physical structure of clause 21, wherein the physical structure is a component of a building.
23. A computer-readable storage medium storing processor-executable instructions that, when executed, cause one or more processors to perform the method of any of clauses 1-18.
24. A computer system comprising a memory and a processor, wherein the computer system is configured to perform the method of any of clauses 1-18.

## Claims

1. A computer-implemented method for transmitting changes during collaborative model editing, the method comprising:
running a modelling application configured to model physical structures as model objects;
receiving a reference model object, wherein the reference model object is representative of at least part of a first model object;
creating a transmission object comprising at least one of:
a proxy model object comprising a modified version of the reference model object; and
a second model object;
creating a reference transmission object, wherein the reference transmission object is representative of at least part of the transmission object; and
transmitting the reference transmission object.

2. The method of claim 1, wherein the transmission object further comprises a connection object configured to connect the proxy model object to another model object,
optionally wherein the connection object models at least one of:
a physical connection between at least two physical entities; and
one or more dependencies between at least two physical entities,
further optionally wherein the connection object further comprises data describing the physical interaction of two or more connected physical entities.

3. The method of claim 1 or 2, wherein the transmission object does not comprise creation logic associated with some or all of the model objects comprised within the transmission object.

4. The method of any preceding claim, wherein the proxy model object is automatically generated responsive to a user input indicating an intended modification to the reference model object.

5. A computer-implemented method for receiving changes during collaborative model editing, the method comprising:
running a modelling application configured to model physical structures as model objects;
transmitting a reference model object comprising at least a portion of a first model object; and
receiving a reference transmission object as described in any of claims 1-4.

6. The method of claim 5, further comprising updating at least one model object based on the reference transmission object, optionally wherein the at least one model object is the first model object.

7. The method of claim 5 or 6, further comprising:
prior to transmitting the reference model object, authenticating a recipient of the reference model object,
wherein the step of transmitting the reference model object is performed responsive to determining that the recipient has been authenticated.

8. The method of any preceding claim, wherein the model objects are configured to be used in a manufacturing process during which the model objects are manufactured.

9. The method of any preceding claim, wherein the transmitting and receiving steps are carried out without using a central controller.

10. The method of any preceding claim, further comprising:
manufacturing, based on at least the reference transmission object, at least one physical structure, the physical structure being modelled, at least in part, by a model object comprised in the reference transmission object.

11. The method of any preceding claim, wherein the modelling application is a Building Information Modelling (BIM) application, optionally wherein the physical structures modelled by model objects comprise components of a building.

12. A manufacturing method comprising manufacturing, using at least a reference transmission object as described in any of claims 1-11, at least one physical structure, the physical structure being modelled, at least in part, by a model object comprised in the reference transmission object.

13. An application configured to generate manufacturing instructions based on a model object and a reference transmission object as described in any of claims 1-11, optionally wherein the application is a Building Information Modelling (BIM) application.

14. A physical structure manufactured using manufacturing instructions derived from at least a reference transmission object, the reference transmission object being as described in any of claims 1-11.

15. A computer-readable storage medium storing processor-executable instructions that, when executed, cause one or more processors to perform the method of any of claims 1-12, or
A computer system comprising a memory and a processor, wherein the computer system is configured to perform the method of any of claims 1-12.
